# FASCICULE DE BREVET EUROPEEN

(11) **EP 4 276 686 B1**
(45) Date de publication et mention de la délivrance du brevet: **06.11.2024**
(21) Numéro de dépôt: 23167600.8
(22) Date de dépôt: 12.04.2023
(51) Int. Cl.: G06K 19/02, G06K 19/077

(54) **PROCÉDÉ DE FABRICATION D'UN ENSEMBLE POUR CARTE ET D'UNE CARTE COMPORTANT UN FILM MÉTALLISÉ, CARTE À MICROCIRCUIT ET ENSEMBLE POUR CARTE**
VERFAHREN ZUR HERSTELLUNG EINER KARTEN- UND KARTENANORDNUNG MIT METALLISIERTEM FILM, MIKROSCHALTUNGSKARTE UND KARTENSATZ
METHOD FOR MANUFACTURING AN ASSEMBLY FOR A CARD AND A CARD COMPRISING A METALLIZED FILM, SMART CARD AND ASSEMBLY FOR A CARD

(30) Priorité: 10.05.2022 FR 2204422
(43) Date de publication de la demande: 15.11.2023
(73) Titulaire: IDEMIA France, 92400 Courbevoie (FR)
(72) Inventeur: POMPEANI, Sylvie, 92400 Courbevoie (FR); GUYON LE BOUFFY, Joseph, 92400 Courbevoie (FR)
(74) Mandataire: Idemia

(56) Documents cités:
- WO-A1-2005/088697
- WO-A1-2018/202774
- US-A1- 2011 031 319
- US-A1- 2021 117 744
- US-B1- 9 460 380

## Description

L'invention se rapport au domaine de la fabrication des cartes à microcircuit, appelées aussi cartes à puce, et plus particulièrement celui des cartes présentant un effet visuel, notamment un effet métallisé.

Typiquement, les cartes à puce présentent la forme d'un parallélépipède rectangle de dimensions 53,98mm * 85,60mm et de très petite épaisseur, inférieure à 1 mm, comprise entre 760 et 840 µm. Ces dimensions sont spécifiées par la norme ISO 7816 sous l'appellation ID-1.

Il est connu de fabriquer ce type de cartes en superposant plusieurs couches en matière plastique puis en les pressant à chaud lors d'une étape de lamination, afin d'assembler les couches les unes aux autres.

Les couches en plastiques peuvent être constituées d'un ou plusieurs substrats en polymère, tel que du PVC, des polyesters (PET, PETf ou PETg), du polycarbonate (PC) ou encore de l'ABS. Ces substrats peuvent en outre recevoir une impression ou encore porter un composant électronique passif tel qu'une antenne.

L'opération de lamination est réalisée au moyen de presses munies de plaques de lamination entre les lesquelles les couches sont chauffées et pressées pour obtenir un assemblage des couches par fusion de la matière à l'interface des couches.

Traditionnellement, les couches se présentent initialement sous des grands formats ou planches regroupant typiquement 24 ou 48 emplacements de carte à microcircuit de format ID-1. Après lamination des couches, les cartes sont découpées unitairement aux dimensions ID-1 par poinçonnage. Selon une variante les couches présentent les dimensions adaptées pour former une seule carte.

Le document de l'art antérieur WO 2018/202774 décrit un procédé de fabrication d'un ensemble métallisé pour carte à microcircuit présentant un effet métallisé, l'ensemble formant une couche interne de cette carte.

Afin d'obtenir des effets esthétiques il est connu de proposer des impressions d'encre sur les couches. Les techniques d'impression sont par exemple la technique lithographie (offset) ou la technique de sérigraphie (silkscreen printing). Il est aussi connu de réaliser des cartes avec un effet métallisé. Cet effet est obtenu à partir d'un film fin de métallisation, d'épaisseur inférieure à 0,01µm, déposé sur un substrat en Polyester (nommé aussi PET polyéthylène téréphtalate). Le subtrat PET recouvert du film métallisé est ensuite laminé avec d'autres substrats. Le document de l'art antérieur US2011/0031319 décrit l'utilisation de foil décoratif à apparence métallique dans une carte bancaire comportant au moins une couche de PET.

Cette couche PET est traditionnellement utilisée pour les cartes à effet métallisé, car son comportement est relativement stable à la lamination, c'est-à-dire qu'il se déforme peu après avoir été chauffé à haute température, c'est-à-dire supérieure à 90°c, de préférence 150°C, et mis sous une pression supérieure à 60N, de préférence entre 60N et 150N pendant une dizaine de minutes.

En effet après une étape de lamination, il se produit des phénomènes de retreint des matières plastiques lors du refroidissement, c'est-à-dire l'inverse du phénomène de dilatation se produisant lors de la montée en température depuis la température ambiante jusqu'à la température de lamination à chaud. Le rétreint est le processus qui conduit à une réduction des dimensions initiales d'une pièce ayant subi un chauffage puis refroidie.

Le faible taux de rétreint de la couche PET, c'est-à-dire son coefficient de dilatation ou rétreint proche de zéro (inférieur à 0,1% à 150°C), rend la couche de PET stable à haute température et permet d'éviter des déformations des autres couches et notamment du film métallisé. Son utilisation permet donc d'éviter un déplacement d'orientation des particules métalliques et de garder un effet visuel homogène de l'effet métallisé sur toute la surface de la carte. Ceci est important pour que les particules métalliques réfléchissent la lumière selon le motif initial du film métallisé tel qu'il a été déposé avant l'étape de lamination.

Traditionnellement les matériaux constitutifs de la carte (en pratique du PVC, un mélange PVC/ABS, du PC, du PETg) ont des coefficients de dilatation/rétreint de plusieurs pourcents à 130°C, typiquement de l'ordre de 3% voire plus, pouvant atteindre de l'ordre de 10% pour le PVC, et compris entre 3 à 6% pour le PETg. Il en découle que lors du refroidissement de la carte laminée à chaud, le rétreint des couches et des overlays déforme le film métallisé qui n'est pas sensible au changement de température. Le film métallisé est donc forcé à onduler.

La présence de PET garantit un rétreint limité voire nul, et donc que le film métallisé ne soit pas distordu.

Toutefois, lorsque le PET est laminé avec d'autres substrats, le taux de rétreint de ce dernier étant différent de celui des autres plastiques, cela entraîne la déformation de la structure de carte, et l'apparition d'un galbe.

Pour répondre à ce problème de galbe, il est connu de l'art antérieur, de compenser l'effet du PET par une deuxième couche de PET intégré dans l'épaisseur de la carte, du côté opposé. La carte présente alors une structure symétrique ou quasi-symétrique par rapport au plan central d'épaisseur. Mais l'ajout de cette deuxième couche de PET est contraignante en ce qu'elle occupe une épaisseur supplémentaire dans un produit dont les dimensions sont très contraintes, à savoir une épaisseur inférieure à 0,84mm.

Afin de pallier ce problème, l'invention propose un nouveau procédé de fabrication d'un ensemble pour carte à effet métallisé, ce nouveau procédé permettant de s'affranchir d'une couche de PET dans l'ensemble et la carte à effet métallisé.

A cet effet, l'invention propose un procédé de fabrication d'un ensemble métallisé pour carte à microcircuit présentant un effet métallisé, l'ensemble formant une couche interne de cette carte, caractérisé en ce qu'il comporte les étapes suivantes : apport d'une couche de support formée d'un matériau plastique sensible à la chaleur présentant un premier taux de rétreint, la couche de support présentant en surface au moins les dimensions d'une carte à microcircuit, apport d'un film métallisé maintenu sur un premier revêtement porteur en matériau plastique non adhésif, le revêtement porteur présentant un taux de rétreint inférieur à celui de la couche de support, transfert du film métallisé sur la couche de support par apport de chaleur et de pression sur une surface de la couche de support, retrait du premier revêtement porteur

Dans la présente invention, le terme taux de rétreint correspond au rapport entre sa taille initiale et sa taille après l'avoir chauffé puis refroidie. Il s'agit du rapport entre la longueur ou largeur de la carte initiale et la longueur et largeur de la carte après avoir subi un traitement thermique. L'épaisseur étant non significative au regard des dimensions de largeur et longueur, elle ne sera pas prise en compte pour évaluer le taux de rétreint.

Grâce à ce procédé il est possible de réaliser un ensemble pour carte comportant un film métallisé tout en s'affranchissant de la présence d'une couche de PET dans cet ensemble. Le placement temporaire d'un revêtement porteur à faible taux de rétreint au cours de l'étape de transfert garantit que l'effet métallisé du film n'est pas déformé. Les particules métallisées gardent donc leur orientation initiale. La présence du revêtement porteur garantit aussi la stabilité de la couche de support pendant cette étape de transfert et la limitation de son rétreint après que la couche support ait été soumise à une haute température sur tout ou partie de sa surface. Ainsi la couche support n'est pas déformée localement par l'étape de transfert et garde sa structure et ses dimensions initiales, c'est-à-dire avant transfert.

De manière avantageuse, le transfert du film métallisé est réalisé après le passage de la couche support et du film métallisé entre deux rouleaux, en continu, ou entre deux plaques, de feuille à feuille, ou entre un rouleau et une plaque, les dimensions de la surface du rouleau et de la plaque étant au moins égales à la dimension d'une carte à microcircuit.

De manière avantageuse, le transfert est réalisé à une température supérieure à la température de transition vitreuse de la couche support, entre 90°C et 170°C.

De manière avantageuse, le transfert du film métallisé est réalisé par apport de chaleur et pression sur une surface couvrant au moins la totalité de la couche de support.

De manière avantageuse, le transfert du film métallisé est réalisé par apport de chaleur et pression sur une surface couvrant au moins la totalité de la couche de support.

De manière avantageuse, le support est en PVC, mélange PVC-ABS, PC, PETg.

De manière avantageuse, lequel le premier revêtement porteur non adhésif est en PET. L'invention concerne aussi un procédé de fabrication de carte à effet métallisé, comportant en outre les étapes suivantes : apport d'au moins une couche centrale recouverte d'une impression et positionnement de cette couche centrale sur la couche de support, du côté opposé au film métallisé, puis apport d'un substrat transparent sur la couche centrale, du côté opposé à la couche de support, le substrat transparent étant destiné à former une face externe de la carte à microcircuit, apport d'un deuxième revêtement sur le film métallisé, le deuxième revêtement présentant un taux de rétreint inférieur à celui de la couche de support, assemblage par lamination à température supérieure à la température de transition vitreuse de la couche support, retrait du deuxième revêtement porteur.

Selon d'autres caractéristiques :
- le deuxième revêtement est une feuille en PET,
- le procédé comporte en outre une étape d'impression sur le film métallisé,
- le procédé comporte une étape supplémentaire de dépose de vernis sur le film métallisé,
- le procédé comporte l'apport d'une couche transparente overlay sur le film métallisé, puis une étape de lamination à une température inférieure à la température de transition vitreuse de la couche support,
- la couche centrale recouverte d'une impression comporte un substrat comportant une antenne. Selon un autre aspect, l'invention propose une carte à microcircuit comportant un film métallisé et uniquement des couches plastiques sensibles à la chaleur et présentant un taux de rétreint supérieur à 0,5% à une température comprise entre 90°C et 170°C.

Selon un autre aspect, l'invention propose un ensemble pour carte, cet ensemble comportant un film métallisé et uniquement une couche plastique sensible à la chaleur et présentant chacune un taux de rétreint supérieur à 0,5% à une température comprise entre 90°C et 170°C.

D'autres caractéristiques et avantages de l'invention ressortent de la description qui suit données à titre d'exemple illustratif et non limitatif en regard des dessins annexés, sur lesquels :
La figure 1 représente une vue schématique d'une vue en coupe d'une structure de carte selon l'art antérieur
La figure .2 représente une vue schématique d'une vue en coupe d'une structure de carte selon l'invention
Les figures 3aet 3b représentent des étapes de fabrication d'un ensemble pour carte selon l'invention
La figure 4 représente une étape intermédiaire du procédé de fabrication d'une carte selon l'invention,
La figure 5 représente l'étape finale du procédé de fabrication d'une carte à effet métallisé selon un mode de réalisation.

Les expressions supérieur, inférieur, dessous, dessus, interne, externe ne sont données qu'à titre purement illustratif pour une meilleure compréhension de l'invention.

Il sera compris dans la suite de la description que les couches ou substrats correspondent aux couches ou substrats empilés d'une seule carte ou encore aux couches ou substrats formant des planches empilées et dans lesquelles sont ensuite découpées plusieurs cartes.

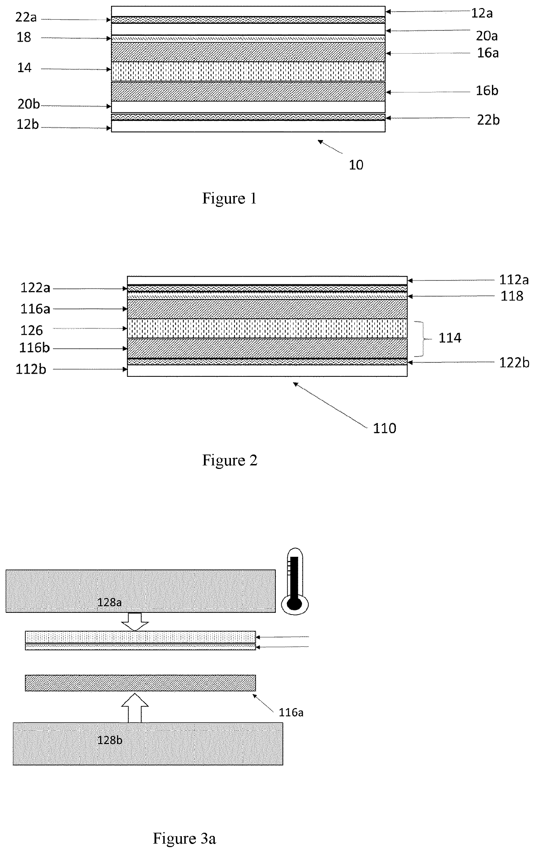

La carte 10 à microcircuit représentée à la figure 1 représente une carte à effet métallisé selon l'art antérieur. De manière connue, cette carte 10 comporte un empilement de plusieurs couches dont deux substrats overlays 12a, 12b formant les couches externes de la carte 10, habituellement transparentes et en matière plastique en PVC. La carte 10 comporte aussi une couche centrale 14 en PVC portant éventuellement une antenne et d'autres composants électroniques. De part et d'autres de cette couche centrale 14 sont disposées des couches support 16a, 16b en PVC, ou d'autres matériaux plastiques tels que le PC polycarbonate, l'ABS ou le PETg. Au moins l'une de ces couches support 16a est destinée à accueillir le film métallisé 18, disposé du côté opposé à la couche centrale 14. Il peut être prévu que chacune des deux couches support 16a, 16b reçoivent un film métallisé 18. Un substrat en PET 20a recouvre le film métallisé 18 afin de limiter la déformation de ce dernier comme indiqué dans la préambule de la description. Afin d'éviter un effet de galbe de la carte 10, c'est-à-dire un effet de courbure de la carte 10, la structure de l'art antérieur comporte un deuxième substrat en PET 20b, placé dans la partie inférieure de la carte 10, de manière sensiblement symétrique au premier substrat en PET 20a par rapport au plan central de la carte 10. Ce deuxième substrat en PET 20b assure la planéité de la carte 10 en ce qu'il vient compenser l'effet de galbe dû à la présence du premier substrat en PET 20a dans la partie supérieure de la carte 10.

Une couche d'impression 22a, 22b est aussi prévue dans la partie inférieure et supérieure, du côté intérieur des overlays 12a, 12b. Ces couches d'impression 22a, 22b peuvent éventuellement être déposées sur la face interne des substrats overlay 12a, 12b, ou sur la face externe des substrats en PET 20a, 20b.

L'ensemble formé dans l'art antérieur nécessite donc un grand nombre de couches, dont le cumul des épaisseurs doit répondre aux spécifications de la norme ISO 7816, à savoir une épaisseur comprise entre 760µm et 840µm. Pour répondre à ce problème il est généralement choisi des couches ou substrat à épaisseurs minces, ce qui augmente le coût de fabrication de la carte 10.

La figure 2 représente une vue en coupe d'une structure d'une carte 110 selon l'invention. La structure de cette carte 110 est nouvelle en ce qu'elle ne comporte pas de substrat en PET. En effet, comme visible à la figure 2, la carte 110 comporte des substrats overlays 112a, 112b, une couche centrale 114, deux couches support 116a, 116b disposées respectivement de part et d'autre de la couche centrale 114 et un film métallisé 118 pris en sandwich entre une des couches support 116a, 116b et un des substrats overlays 112a, 112b. Les couches support 116a, 116b et la couche centrale 114 et les substrats overlays sont en matériau plastique sensibles à la chaleur, présentant sensiblement les mêmes propriétés de déformation après avoir été soumises à un traitement thermique. On entend par sensible à la chaleur une couche plastique dont le comportement n'est pas stable, c'est-à-dire présentant un taux de rétreint non nul, supérieur à 0,5%, lorsqu'elle est soumise à des températures élevées entre 90°C et 170°C. A titre d'exemple le PVC présente un taux de rétreint compris entre 5 à 10 % à 140 °C. A l'inverse, on considérera un matériau stable et peu sensible à la chaleur, un matériau présentant un taux de rétreint proche de zéro, inférieur à 0,5%, tel que le PET

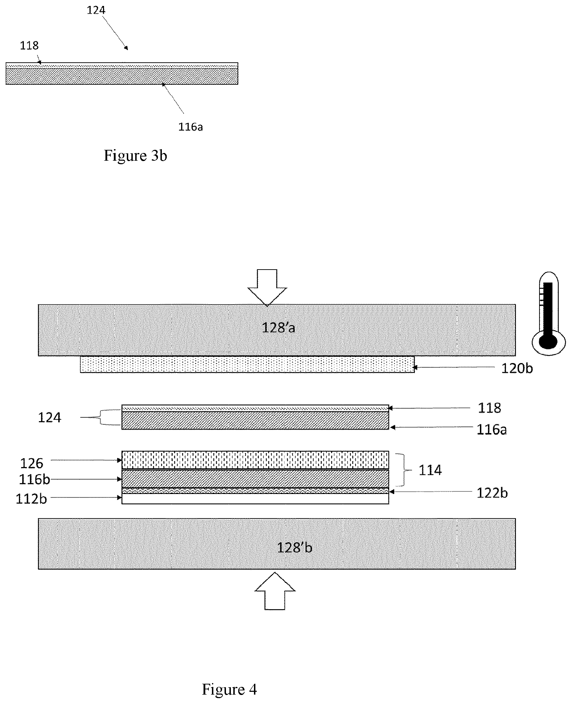

La carte 110 représentée à la figure 2 est obtenue en plusieurs étapes de fabrication. Plus précisément elle résulte de la combinaison d'une première étape d'assemblage, formant un ensemble 124 représenté aux figures 3a et 3b, et d'une deuxième étape d'assemblage, assemblant l'ensemble 124 avec d'autres couches et substrats. Dans la suite de la description, cette deuxième étape d'assemblage sera décrite sous la forme de deux sous-étapes d'assemblage successives.

Il va être décrit, dans un premier temps, la structure de l'ensemble 124, illustrée schématiquement par les figures 3a et 3b, et son procédé de fabrication.

L'ensemble 124 de la figure 3b comporte une couche de support 116a formée d'un matériau plastique polymère tel que du PVC, d'un mélange ABS-PVC, du PC, du PETg, sensible à la chaleur présentant un premier taux de rétreint non nul, c'est-à-dire supérieur à 0,5% entre 90°C et 170°C, et un film métallisé 118 plaqué contre une première face de la couche de support 116a.

Le procédé de fabrication de cet ensemble 124 est réalisé de la manière suivante: on apporte la couche de support 116a, puis on positionne un film métallisé 118, maintenu sur un premier revêtement porteur 120a non adhésif, appelé aussi liner, en regard de de la couche support 116a, tel qu'illustré en figure 3a. Le film métallisé 118 maintenu sur le premier revêtement porteur 120a est ensuite positionné sur la couche support 116a, et les trois éléments sont soumis à l'apport de pression, dans les plages de valeurs de pression indiquées dans le préambule de la description, et de chaleur, entre 90 et 170°C , sur la surface de la couche support, afin d'effectuer le transfert du film métallisé 118 sur la couche support 116a. Après refroidissement de l'ensemble 124, lorsque le comportement de la couche support 116a est stable, le premier revêtement porteur 120a est ensuite retiré.

Le matériau du premier revêtement porteur 120a est choisi de sorte à présenter un taux de rétreint proche de zéro, de sorte à ne pas déformer le film métallisé 118. Ce taux de rétreint est choisi inférieur au taux de rétreint de la couche support 116a. Selon un mode de réalisation particulier le premier revêtement porteur 120a est en PET et la couche support 116a est en matière plastique PVC .

Lors de l'étape de transfert, c'est-à-dire lors de la montée à haute température suivi du refroidissement, le premier revêtement porteur 120a se déforme peu du fait de son faible taux de rétreint. La température est augmentée progressivement jusqu'à une valeur maximum comprise entre 90°C et 170°C qui est supérieure à la température de transition vitreuse de la couche support 116a. Le revêtement porteur maintient le film métallisé 118 mais aussi la couche support 116a de sorte que le comportement de cette dernière reste stable, même au-delà de sa température de transition vitreuse. Tant que le revêtement porteur 120a est présent, la couche support 116a et le film métallisé 118, maintenu sur le revêtement porteur 120a, ne se déforment pas ou peu. Ensuite, après refroidissement de l'ensemble 124 le revêtement porteur 120a est ensuite retiré. Le film métallisé 118 reste positionné sur la couche support 116a.

Afin de garantir la bonne adhésion du film métallisé 118 sur la couche support 116a, une couche d'adhésif est déposée sur le film métallisé 118, du côté opposé au revêtement porteur 120a. Cet adhésif est activé par la montée en température lors de l'étape de transfert.

Selon une variante dans laquelle toute la surface de la carte présente un aspect métallisé, il est vérifié que le film métallisé 118 présente des dimensions égales ou supérieures à celle de la couche support 116a de sorte à garantir le recouvrement total de la surface d'une surface de carte ou d'une planche de plusieurs cartes.

Selon une variante du procédé de fabrication, le transfert du film métallisé118 est réalisé par dépôt en continu entre deux rouleaux pour permettre une continuité d'alimentation des couches sur les chaines de production.

Selon une autre variante, le transfert s'effectue sur une couche support sous format de feuille présentant un nombre déterminé d'emplacements de cartes de format ID-1. Le transfert peut alors être réalisé lorsque la couche support 116a en format feuille est prise en en sandwich entre un rouleau et une plaque de presse, ou encore entre deux plaques 128a, 128b de presse, ce dernier mode étant illustré à la figure 3a. Lors de l'application de ces technologies de transfert, il sera vérifié que, quelle que soit les dimensions du film, que le premier revêtement porteur 120a recouvre bien au moins la totalité de la surface théorique de contact entre la couche support 116a et le rouleau ou la plaque de presse. Selon une variante le premier revêtement porteur 120a recouvre la totalité de la surface d'une carte ou de la surface d'un ou plusieurs emplacements de cartes.

Après réalisation de l'ensemble 124 illustré à la figure 3b, il est procédé à la deuxième étape d'assemblage qui comporte une première sous-étape, illustrée à la figure 4, comprenant l'apport d'au moins une couche centrale 114 recouverte éventuellement d'une impression 122b et son positionnement sur la couche support 116a du côté opposé au film métallisé 118. Un substrat overlay transparent 112b est positionné en regard de la couche centrale 114, du côté opposé à la couche support 116a.

La couche centrale 114 et le substrat overlay transparent 112b sont fabriqués à partir de matières plastiques sensibles à la chaleur telles que du PVC, un mélange PVC-ABS, du pETg, ou du PC. Lors de la première sous-étape d'assemblage de la figure 4, l'ensemble 124, la couche centrale 114 et le substrat overlay transparent 112b sont alors laminés, c'est-à-dire mis sous pression entre deux plaques de lamination 128'a, 128'b, similaires à celles de la figure 3a, à haute température, par exemple 150°C. De plus, un deuxième revêtement porteur 120b non adhésif à faible taux de rétreint, tel que du PET, est positionné au-dessus du film métallisé 118, entre le film 118 et la plaque de lamination, pour limiter le rétreint de la couche support 116a et protéger le film 118, comme cela a été expliqué pour l'étape de fabrication de l'ensemble 124 . Ce deuxième revêtement porteur non adhésif 120b est réalisé en matériau plastique non sensible à la chaleur, par exemple du PET et présente des dimensions en surface supérieures à celles d'au moins une carte à former. Il est ensuite retiré après la première sous-étape d'assemblage.

Il peut être prévu d'ajouter une couche d'impression 122a sur le film métallisé 118 avant la lamination de la première sous-étape d'assemblage. Un primaire peut est déposé sur le film métallisé 118 avant la couche d'impression pour garantir la bonne adhésion de l'encre.

Ensuite, lors d'une deuxième sous-étape d'assemblage, une couche protectrice est ajoutée du côté opposé au substrat overlay transparent 112b. Cette couche protectrice est ajoutée, après la première sous-étape, plus particulièrement après refroidissement à température ambiante et retrait du deuxième revêtement 120b non adhésif.

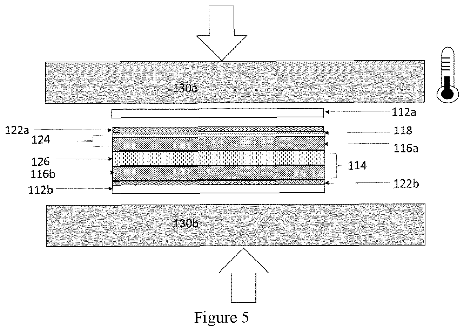

Selon une variante, illustrée à la figure 5, cette couche protectrice est formée d'un substrat overlay transparent 112a. Selon cette variante, la carte 110 comporte deux substrats transparents overlay 112a, 112b, formant respectivement la couche supérieure externe et la couche inférieure externe de la carte 110.

Le substrat overlay transparent 112a est assemblé avec l'ensemble 124, la couche centrale 114 et le substrat overlay transparent 112b lors d'une étape de lamination à basse température illustrée à la figure 5 entre deux plaques de lamination 130a, 130b, à basse température. La basse température de l'étape de lamination est inférieure à la température de transition vitreuse de la couche de support 116a, de sorte que la couche support 116a, le substrat overlay transparent 112b et la couche centrale 114 ne subissent pas de déformation. Cette température est inférieure à 90°C pour le PVC, par exemple.

Le choix de cette basse température de lamination permet de diminuer considérablement les déformations des matières plastiques, voire de les éviter et ainsi de ne pas modifier l'aspect visuel du film métallisé.

Selon une deuxième variante, cette couche protectrice est formée d'un vernis protecteur.

La dépose du vernis est réalisée par des procédés de dépose connus de l'homme du métier tel que par sérigraphie ou par technologie jet d'encre, ou pulvérisation par spray.

Selon d'autres variantes de réalisation, la couche centrale 114 est constituée d'un substrat 126 muni une antenne incrustée dans son épaisseur et d'une deuxième couche support 116b. A cet effet, la couche centrale 114 est formée par assemblage de deux substrats distincts, l'un destiné à recevoir l'impression, l'autre portant l'antenne.

L'assemblage des couches selon le procédé décrit ci-dessus permet d'obtenir une ou plusieurs cartes avec un effet métallisé 118 tout en s'affranchissant de la présence de deux couches à faible taux de rétreint tel que cela était connu de l'art antérieur.

Outre les avantages présentés précédemment, l'invention facilite l'adhésion de la couche d'impression 122b sur la couche centrale. En effet dans les structures de l'art antérieur illustrées par la figure 1, l'impression est déposée sur une couche de PET 20a, 20b qui présente des mauvaises propriétés d'adhésion. Il est alors nécessaire d'ajouter un primaire avant la dépose de la couche d'impression 22a, 22b. Ce qui augmente les coûts de production de la carte Les exemples de réalisation considéré ci-dessus sont décrits sur la base d'une liste de matériaux donnés à titre d'exemple mais qui ne sont nullement limitatifs.

## Revendications

1. Procédé de fabrication d'un ensemble métallisé pour carte à microcircuit (110) présentant un effet métallisé, l'ensemble formant une couche interne de cette carte, **caractérisé en ce qu'**il comporte les étapes suivantes :
- Apport d'une couche de support (116a) formé d'un matériau plastique sensible à la chaleur présentant un premier taux de rétreint, la couche de support (116a) présentant en surface au moins les dimensions d'une carte (110) à microcircuit,
- Apport d'un film métallisé (118) maintenu sur un premier revêtement porteur (120a) non adhésif, le premier revêtement porteur (120a) présentant un taux de rétreint inférieur à celui de la couche de support (116a)
- Transfert du film métallisé (118) sur la couche de support (116a) par apport de chaleur et de pression sur une surface de la couche de support (116a)
- Retrait du premier revêtement porteur (120a).

2. Procédé de fabrication selon la revendication précédente, dans lequel le transfert du film métallisé (118) est réalisé après le passage de la couche support (116a) et du film métallisé (118) entre deux rouleaux, en continu, ou entre deux plaques, de feuille à feuille, ou entre un rouleau et une plaque, les dimensions de la surface du rouleau et de la plaque étant au moins égales à la dimension d'une carte (110) à microcircuit.

3. Procédé de fabrication selon l'une des revendications précédentes, dans lequel le transfert du film métallisé est réalisé par apport de chaleur et pression sur une surface couvrant au moins la totalité de la couche de support (116a).

4. Procédé selon l'une des revendications précédentes, dans lequel le transfert est réalisé à une température supérieure à la température de transition vitreuse de la couche support (116a), entre 90°C et 170°C.

5. Procédé selon l'une des revendications précédentes, dans lequel le support (116a) est en PVC, mélange PVC-ABS, PC, PETg.

6. Procédé selon l'une des revendications précédentes, dans lequel le premier revêtement porteur (120a) non adhésif est en PET.

7. Procédé de fabrication d'une carte (110) à microcircuit présentant un effet métallisé, **caractérisé en ce qu'**il comporte, notamment, les étapes suivantes, succédant aux étapes du procédé selon l'une des revendications 1 à 6 :
- Apport d'au moins une couche centrale (114) recouverte d'une couche d'impression (122b) et positionnement de cette couche centrale (114) sur la couche de support (116a), du côté opposé au film métallisé (118)
- Puis apport d'un substrat overlay transparent (112b) sur la couche centrale (114), du côté opposé à la couche de support (116a), le substrat overlay transparent (112b) étant destiné à former une face externe de la carte (110) à microcircuit
- Apport d'un deuxième revêtement porteur (120b) au-dessus du film métallisé (118), le deuxième revêtement (120b) présentant un taux de rétreint inférieur à celui de la couche de support (116a)
- assemblage par lamination à température supérieure à la température de transition vitreuse de la couche support (116a),
- retrait du deuxième revêtement porteur (120b).

8. Procédé selon la revendication 7, dans lequel le deuxième revêtement porteur (120b) est une feuille en PET.

9. Procédé selon l'une des revendications 7 et 8, comportant en outre une étape d'impression sur le film métallisé (118).

10. Procédé selon l'une des revendications 7 à 9, comportant en outre une étape supplémentaire de dépose de vernis sur le film métallisé (118).

11. Procédé selon l'une des revendications 7 à 9, comportant en outre l'apport d'une couche transparente overlay (112a) sur le film métallisé (118), puis une étape de lamination à une température inférieure à la température de transition vitreuse de la couche support (116a).

12. Procédé de fabrication d'une carte (110) selon l'une des revendication 7 à 11, dans lequel la couche centrale (114) recouverte d'une couche d'impression (122b) comporte un substrat (126) comportant une antenne.

13. Carte (110) à microcircuit obtenue par le procédé selon l'une des revendications 7 à 12, cette carte (110) comportant un film métallisé (118) et uniquement des couches plastiques sensibles à la chaleur et présentant chacune un taux de rétreint supérieur à 0,5% à une température comprise entre 90°C et 170°C.

14. Ensemble (124) pour carte (110) obtenu par le procédé selon l'une des revendications 1 à 6, cet ensemble comportant un film métallisé (118) et uniquement une couche plastique sensible à la chaleur et présentant un taux de rétreint supérieur à 0,5% à une température comprise entre 90°C et 170°C.

## Patentansprüche

1. Verfahren zur Herstellung einer metallisierten Anordnung für eine Karte mit Mikroschaltkreis (110), die einen metallisierten Effekt aufweist, wobei die Anordnung eine innere Schicht dieser Karte bildet, **dadurch gekennzeichnet, dass** es die folgenden Schritte umfasst:
- Zuführen einer Trägerschicht (116a), die aus einem wärmeempfindlichen Kunststoffmaterial gebildet ist, das eine erste Schrumpfrate aufweist, wobei die Trägerschicht (116a) an der Oberfläche mindestens die Abmessungen einer Karte (110) mit Mikroschaltkreis aufweist,
- Zuführen eines metallisierten Films (118), der auf einer nicht klebenden ersten tragenden Haut (120a) gehalten wird, wobei die erste tragende Haut (120a) eine Schrumpfrate aufweist, die geringer als die der Trägerschicht (116a) ist
- Transferieren des metallisierten Films (118) auf die Trägerschicht (116a) durch Zuführen von Wärme und von Druck auf eine Oberfläche der Trägerschicht (116a)
- Entfernen der ersten tragenden Haut (120a).

2. Verfahren zur Herstellung nach dem vorhergehenden Anspruch, wobei das Transferieren des metallisierten Films (118) nach dem Durchgang der Trägerschicht (116a) und des metallisierten Films (118) zwischen zwei Walzen, kontinuierlich, oder zwischen zwei Platten, Blatt für Blatt, oder zwischen einer Walze und einer Platte ausgeführt wird, wobei die Abmessungen der Oberfläche der Walze und der Platte mindestens gleich der Abmessung einer Karte (110) mit Mikroschaltkreis sind.

3. Verfahren zur Herstellung nach einem der vorhergehenden Ansprüche, wobei das Transferieren des metallisierten Films durch Zuführen von Wärme und Druck auf eine Oberfläche ausgeführt wird, die mindestens die gesamte Trägerschicht (116a) abdeckt.

4. Verfahren nach einem der vorhergehenden Ansprüche, wobei das Transferieren bei einer Temperatur ausgeführt wird, die über der Glasübergangstemperatur der Trägerschicht (116a) liegt, zwischen 90 °C und 170 °C.

5. Verfahren nach einem der vorhergehenden Ansprüche, wobei der Träger (116a) aus PVC, PVC-ABS-Mischung, PC, PETg ist.

6. Verfahren nach einem der vorhergehenden Ansprüche, wobei die nicht klebende erste tragende Haut (120a) aus PET ist.

7. Verfahren zur Herstellung einer Karte (110) mit Mikroschaltkreis, die einen metallisierten Effekt aufweist, **dadurch gekennzeichnet, dass** es, insbesondere, die folgenden Schritte umfasst, die auf die Schritte des Verfahrens nach einem der Ansprüche 1 bis 6 folgen:
- Zuführen mindestens einer zentralen Schicht (114), die mit einer Bedruckungsschicht (122b) beschichtet ist, und Positionieren dieser zentralen Schicht (114) auf der Trägerschicht (116a), auf der zu dem metallisierten Film (118) entgegengesetzten Seite
- Dann Zuführen eines transparenten Overlay-Substrats (112b) auf die zentrale Schicht (114), auf der zu der Trägerschicht (116a) entgegengesetzten Seite, wobei das transparente Overlay-Substrat (112b) dazu bestimmt ist, eine Außenseite der Karte (110) mit Mikroschaltkreis zu bilden
- Zuführen einer zweiten tragenden Haut (120b) über dem metallisierten Film (118), wobei die zweite Haut (120b) eine Schrumpfrate aufweist, die geringer als die der Trägerschicht (116a) ist
- Verbinden durch Laminieren bei einer Temperatur über der Glasübergangstemperatur der Trägerschicht (116a),
- Entfernen zweiten tragenden Haut (120b).

8. Verfahren nach Anspruch 7, wobei die zweite tragende Haut (120b) eine Folie aus PET ist.

9. Verfahren nach einem der Ansprüche 7 und 8, umfassend ferner einen Schritt des Druckens auf den metallisierten Film (118).

10. Verfahren nach einem der Ansprüche 7 bis 9, umfassend ferner einen zusätzlichen Schritt des Auftragens von Lack auf den metallisierten Film (118).

11. Verfahren nach einem der Ansprüche 7 bis 9, umfassend ferner das Zuführen einer transparenten Overlay-Schicht (112a) auf dem metallisierten Film (118), dann einen Schritt des Laminierens bei einer Temperatur unter der Glasübergangstemperatur der Trägerschicht (116a).

12. Verfahren zur Herstellung einer Karte (110) nach einem der Ansprüche 7 bis 11, wobei die zentrale Schicht (114), die mit einer Bedruckungsschicht (122b) beschichtet ist, ein Substrat (126) umfasst, das eine Antenne umfasst.

13. Karte (110) mit Mikroschaltkreis, die mit dem Verfahren nach einem der Ansprüche 7 bis 12 erhalten wird, wobei diese Karte (110) einen metallisierten Film (118) umfasst und nur Kunststoffschichten, die wärmeempfindlich sind und jeweils eine Schrumpfrate aufweisen, die bei einer Temperatur zwischen 90 °C und 170 °C mehr als 0,5 % beträgt.

14. Anordnung (124) für eine Karte (110), die mit dem Verfahren nach einem der Ansprüche 1 bis 6 erhalten wird, wobei diese Anordnung einen metallisierten Film (118) umfasst und nur eine Kunststoffschicht, die wärmeempfindlich ist und eine Schrumpfrate aufweist, die bei einer Temperatur zwischen 90 °C und 170 °C mehr als 0,5 % beträgt.

## Claims

1. Method for fabricating a metallized assembly for a microcircuit card (110) having a metallized effect, the assembly forming an internal layer of this card, **characterized in that** it comprises the following steps:
- addition of a support layer (116a) formed by a plastic material sensitive to heat exhibiting a first shrinkage ratio, the support layer (116a) having, on the surface, at least the dimensions of a microcircuit card (110),
- addition of a metallized film (118) held on a first non-adhesive bearing liner (120a), the first bearing liner (120a) exhibiting a shrinkage ratio less than that of the support layer (116a),
- transfer of the metallized film (118) onto the support layer (116a) by the application of heat and pressure on a surface of the support layer (116a),
- removal of the first bearing liner (120a).

2. Fabrication method according to the preceding claim, wherein the transfer of the metallized film (118) is performed after the passage of the support layer (116a) and of the metallized film (118) between two rollers, continuously, or between two plates, sheet-by-sheet, or between a roller and a plate, the dimensions of the surface of the roller and of the plate being at least equal to the dimension of a microcircuit card (110).

3. Fabrication method according to one of the preceding claims, wherein the transfer of the metallized film is performed by the application of heat and pressure on a surface covering at least all of the support layer (116a) .

4. Method according to one of the preceding claims, wherein the transfer is performed at a temperature greater than the glass transition temperature of the support layer (116a), between 90°C and 170°C.

5. Method according to one of the preceding claims, wherein the support (116a) is made of PVC, a mixture of PVC-ABS, PC, PETg.

6. Method according to one of the preceding claims, wherein the first non-adhesive bearing liner (120a) is made of PET.

7. Method for fabricating a microcircuit card (110) exhibiting a metallized effect, **characterized in that** it comprises, notably, the following steps following the steps of the method according to one of Claims 1 to 6:
- addition of at least one central layer (114) covered by a print layer (122b) and positioning of this central layer (114) on the support layer (116a), on the side opposite to the metallized film (118),
- then addition of a transparent overlay substrate (112b) on the central layer (114), on the side opposite to the support layer (116a), the transparent overlay substrate (112b) being intended to form an outer face of the microcircuit card (110),
- addition of a second bearing liner (120b) on top of the metallized film (118), the second liner (120b) exhibiting a shrinkage ratio less than that of the support layer (116a),
- assembly by lamination at a temperature higher than the glass transition temperature of the support layer (116a),
- removal of the second bearing liner (120b).

8. Method according to Claim 7, wherein the second bearing liner (120b) is a sheet of PET.

9. Method according to one of Claims 7 and 8, further comprising a step of printing on the metallized film (118) .

10. Method according to one of Claims 7 to 9, further comprising an additional step of depositing varnish on the metallized film (118).

11. Method according to one of Claims 7 to 9, further comprising the addition of a transparent overlay layer (112a) on the metallized film (118), then a step of lamination at a temperature lower than the glass transition temperature of the support layer (116a).

12. Method for fabricating a card (110) according to one of Claims 7 to 11, wherein the central layer (114) covered by a print layer (122b) comprises a substrate (126) comprising an antenna.

13. Microcircuit card (110) obtained by the method according to one of Claims 7 to 12, this card (110) comprising a metallized film (118) and only plastic layers sensitive to heat and each exhibiting a shrinkage ratio greater than 0.5% at a temperature of between 90°C and 170°C.

14. Assembly (124) for a card (110) obtained by the method according to one of Claims 1 to 6, this assembly comprising a metallized film (118) and only one plastic layer sensitive to heat and exhibiting a shrinkage ratio greater than 0.5% at a temperature of between 90°C and 170°C.
